# EUROPEAN PATENT APPLICATION

(11) **EP 1 160 677 A1**
(43) Date of publication of application: **05.12.2001**
(21) Application number: 99907838.9
(22) Date of filing: 26.02.1999
(51) Int. Cl.: G06F 15/177

(54) **SIGNAL PROCESSOR**

(71) Applicant: FUJITSU LIMITED, Kawasaki-shi, Kanagawa 211-8588 (JP)
(72) Inventor: KOBAYASHI, Noboru Fujitsu Limited, Kawasaki-shi Kanagawa 211-8588 (JP); FUJINO, Naoji Fujitsu Limited, Kawasaki-shi Kanagawa 211-8588 (JP); KURIHARA, Hideaki Fujitsu Limited, Kawasaki-shi Kanagawa 211-8588 (JP); TSUBOI, Mitsuru Fujitsu Limited, Kawasaki-shi Kanagawa 211-8588 (JP); SATO, Teruyuki Fujitsu Limited, Kawasaki-shi Kanagawa 211-8588 (JP); NISHIDA, Fumiaki Fujitsu Limited, Kawasaki-shi Kanagawa 211-8588 (JP)
(74) Representative: HOFFMANN - EITLE
(86) International application number: JP9900898
(87) International publication number: WO0052591

(57) **Abstract**

A signal processing apparatus for assigning channels to a plurality of DSP's to be used comprises a control circuit for controlling the DSP's, a library for storing a plurality of signal processing algorithms, and a channel assignment table. The control circuit, when an assignment designation of a channel and an algorithm for each of the DSP's is received, compares the designated algorithm with the algorithms having been already downloaded to the DSP's based on the table, thereby downloading only an algorithm required to be newly downloaded from the library to the DSP's or between the DSP's and assigning the downloaded algorithm to the received channel. The channel assignment table can fixedly/variably store a relationship between processing positions (time slots) in addition to the relationship between the channels and the DSP's. In the presence of an empty processing position in a DSP, the algorithm is newly downloaded from the concerned DSP, while in the absence of an empty processing position in a DSP, the algorithm is downloaded from another DSP, and then the table is updated.

## Description

### Technical Field

The present invention relates to a signal processing apparatus, and in particular to a signal processing apparatus used for a voice encoder/decoder, and the like.

### Background Art

An ATM transmission has been widely used along with diversification of media, and the like. For effectively packing various data, an encoding method by which information amount is made small has been adopted for voice as well.

Even if a new voice encoding method comes into service, an existing one has to be continued in parallel, so that some methods coexist for a certain period. A plurality of methods including compression of e.g. 64 kbps into 16 kbps or 8 kbps have been applied to a voice encoder used in a transmission apparatus of a recent backbone system.

In this connection, there is no problem in particular with user's terminals because they are individually equipped with a voice CODEC corresponding to each method. However, in an infrastructure system that can not specify which terminal and method make a connection request, it is necessary to hold such methods within a hardware.

As for a voice encoder/decoder (hereinafter, referred to as CODEC), it is necessary to prepare realizing a plurality of algorithms. Although an apparatus having all of the CODEC's aggregated may well be produced, the hardware scale becomes large and the cost is high, so that the apparatus having all of the CODEC's aggregated does not provide a realistic solution.

Also, since kinds of the CODEC's required for maintaining services change every moment, a flexible arrangement corresponding to the change is desired. Actually, the CODEC is realized by a DSP (Digital Signal Processor) in many cases, where a so-called mask ROM-type DSP having preliminarily written therein a program, or a download-type DSP having installed therein an RAM to be written with the program from the outside of the DSP is used.

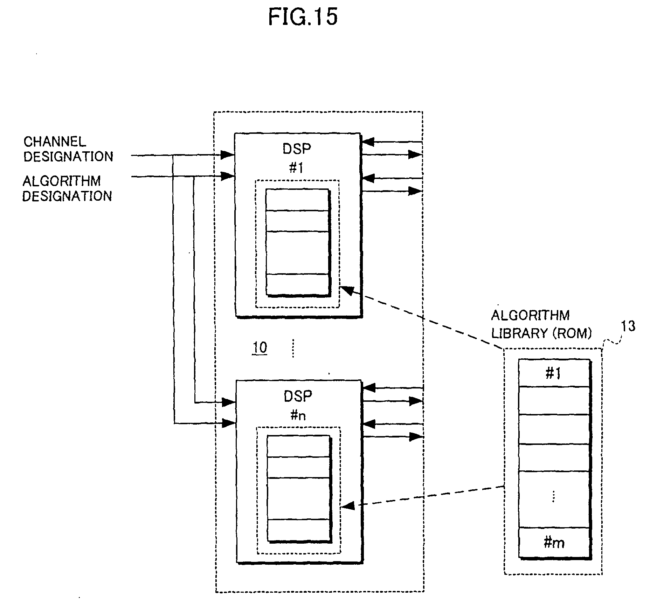

Fig.15 shows an arrangement of a prior art signal processing apparatus, in which DSP's #1-#n (hereinafter generally represented by DSP 10) of the mask ROM type having preliminarily stored firmware are prepared, and all algorithms to be used are preliminarily stored as mask ROM codes in the DSP 10 from an algorithm library 13. In some cases, they are added to the DSP 10 in the form of an external memory.

Information indicating which algorithm is used for each channel is provided to the DSP 10 from upper control software of an infrastructure system which controls the operation of the CODEC composed of the DSP 10.

By such a method, it is obvious that all of the algorithms can not be accommodated if the number of the algorithms becomes large. Also, there is a problem that even if prepared algorithms becomes hardly used, they can not be deleted unless the possibility of use is null.

In such a case, the whole of the firmware for realizing all of the algorithms may be stored in the mask ROM or the built-in RAM. However, it has been disadvantageous that an internal memory capacity is not generally large enough to store the whole of the firmware, and the cost of the DSP having such a large capacity becomes extremely high.

Furthermore, since algorithms depend on calls from subscribers, when and which algorithm is required can not be preliminarily known. Moreover, since the switchover times of the algorithms influence the connection times of the calls, it must be made as short as possible.

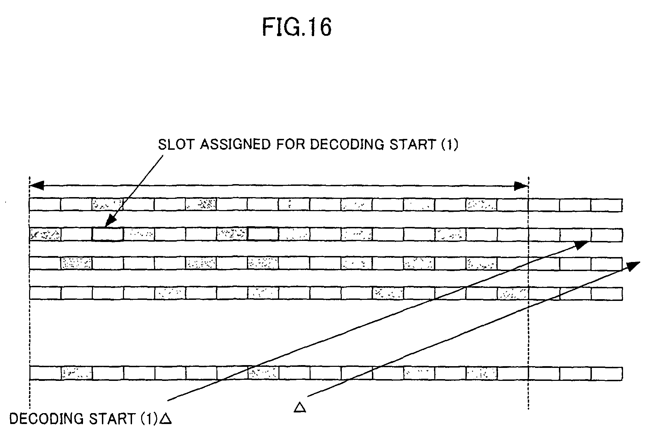

Also, when the algorithms are started up, a fixed time slot has been assigned as a processing position in the prior art. Therefore, as shown in Fig.16, even though encoded data are inputted at the time of a decoding start (1), the data are to be processed at the next frame if a predetermined time slot has already passed, leading to a problem that a processing delay of approximately a single frame at the maximum occurs.

It is accordingly an object of the present invention to provide a signal processing apparatus for assigning channels, to be used, to a plurality of DSP's, which comprises a control circuit for controlling the DSP's and a library for storing a plurality of signal processing algorithms, which can execute a program for realizing a plurality of algorithms on a plurality of DSP's, which can switch over the algorithms in a short time, and which can prevent the algorithm startup from being delayed.

### Disclosure of Invention

In order to achieve the above-mentioned object, a signal processing apparatus according to the present invention [1] is characterized in that a channel assignment table is provided, and the control circuit, when an assignment designation of a channel and an algorithm for each of the DSP's is received, compares the designated algorithm with the algorithms having been already downloaded to the DSP's based on the table, thereby downloading only an algorithm required to be newly downloaded from the library to the DSP's or between the DSP's and assigning the downloaded algorithm to the received channel.

Namely, in the present invention, the channel assignment table indicates which algorithms have been downloaded to the DSP's. The control circuit which has received the assignment designation of the channel and the algorithm for each of the DSP's downloads only an algorithm, by referring to the channel assignment table, required to be newly downloaded from the library or between the DSP's to be assigned to the channel.

Thus, since the assignment of the channel and the algorithm is performed every time the assignment designation thereof occurs, each of the DSP's has only to have a RAM for a single algorithm, enabling an inexpensive DSP to be used. Also, the change of the algorithm can be performed by only the change of the library for easy substitution of the algorithm, enabling a downloading time to be shortened.

Also, in the present invention [2], the above-mentioned channel assignment table may fixedly store a relationship between channels in use and the DSP's, and the control circuit may detect a DSP corresponding to the designated channel by referring to the table and newly download the designated algorithm from the library for the DSP.

Namely, in the present invention, since the channel assignment table fixedly prescribes the relationship between the channels in use and the DSP's, the DSP corresponding to the designated channel is uniquely determined, and the designated algorithm is downloaded to the DSP from the library, so that downloading capable of being made all the time from the library will realize easy control.

Also, as the present invention [3], in the above-mentioned present invention [2], the channel assignment table may fixedly store the relationship between the channels and processing positions (e.g. time slots), and the control circuit may start up the algorithm at an empty processing position in assigned processing positions by referring to the table for the DSP to which the algorithm is newly downloaded.

Namely, since the above-mentioned channel assignment table can further fixedly store the relationship between the channels and the processing positions, the control circuit can start up the algorithm at an empty processing position, if there is the empty processing position in assigned processing positions, by referring to the table for the DSP to which the algorithm is newly downloaded.

In the above-mentioned present inventions [1]-[3], it takes a certain time to perform the download processing from the library. This processing time is reflected on e.g. the time required for a call connection, and so becomes visible to the users, resulting in a deterioration of service quality. Also, a large capacity is required for the library storing a plurality of algorithms, and the access time is not short. While RAM can be used therefor, the scale of RAM integration is generally smaller than ROM, so that the downsizing is difficult.

Therefore, as the present invention [4], the channel assignment table may variably store a relationship between the channels in use and the DSP's, and in case a DSP exists which has already downloaded the designated algorithm and which has an unused channel, the control circuit may use the algorithm of the DSP and update the table.

Also, as the present invention [5], the channel assignment table may variably store the relationship between the channels in use and the DSP's, and in case a DSP exists which has already downloaded a designated algorithm and which has no unused channel, the control circuit may newly download the algorithm from the DSP to a different DSP, and update the table.

Namely, the present invention does not fixedly make the channels correspond to the DSP's being actually used, but manages them dynamically. A certain DSP can be used for a channel Ch1 or a channel Ch2. Dynamic definition of the correspondence enables the control so as for the connection time to become shorter.

When the assignment designation of the channel and the algorithm is performed for example, the algorithm being supposed to have been already downloaded to a certain DSP, the assignment designation is provided to the concerned DSP, which is simultaneously controlled to be connected to the channel to which the assignment designation is performed. Thus, setting can be completed without newly downloading from the library.

Also, in case a DSP which has already downloaded the algorithm to which the assignment designation is performed is being used for a certain channel, the downloading can be realized by transferring the algorithm downloaded to the DSP to a different DSP.

Thus, since the library composed of the ROM or a PC card is a device operated at a low speed but the DSP operates at a high speed so as to realize a machine cycle of the order of 10 ns, the efficiency can be obtained several-fold in view of the access time ratio even in consideration of an overhead for synchronization of transfer between the DSP's.

Also, as the present invention [6], the above-mentioned channel assignment table may variably store a relationship between the channels in use, the DSP's, and processing positions, and in case a DSP exists which has already downloaded the designated algorithm and which has an empty processing position, the control circuit may newly download the algorithm from the DSP, and update the table.

Furthermore, as the present invention [7], the channel assignment table may variably store the relationship between the channels in use, the DSP's, and the processing positions, and in case a DSP exists which has already downloaded a designated algorithm and which has no empty processing position, the control circuit may newly download the algorithm of the DSP to a different DSP, and update the table.

Namely, in the present inventions [6] and [7], the above-mentioned channel assignment table variably stores the relationship with the processing positions in addition to the relationship between the channels in use and the DSP's. Therefore, if a DSP exists which has already downloaded the designated algorithm in the same way as the channels and which has an empty processing position, the control circuit downloads the algorithm from the DSP, by referring to the channel assignment table. If the DSP has no empty processing position, the algorithm of the DSP is transferred to a different DSP to be downloaded. The table is updated in either case.

Thus, when encoded data are inputted at a decoding start point for example, it becomes possible to assign a channel for a decoding start to the closest processing position to which voice encoding can be assigned. Accordingly, voice can be outputted immediately after the decoding is completed, thereby enabling the processing delay to be shortened.

Also, as the present invention [8], in the above-mentioned invention [5] or [7], the control circuit may select a DSP which has downloaded an algorithm with a lower priority as the different DSP. Thus, it becomes possible to reduce a competitive relationship in case of accessing the DSP.

Furthermore, as the present invention [9], the control circuit may start up the downloaded algorithm at an assigned processing position.

Also, as the present invention [10], the control circuit may have initially downloaded an identical algorithm to the DSP's, and as the present invention [11], the control circuit may have initially downloaded different algorithms to the DSP's.

Furthermore, as the present invention [12], the control circuit may have preliminarily downloaded an algorithm with a highest priority within algorithms not downloaded to DSP's in which empty channels have occurred.

Namely, in the present invention, it is preferable that a predetermined algorithm is downloaded to the DSP where the processing is completed and an empty channel has occurred. If the algorithm with the highest priority is preliminarily downloaded in this case, the downloading can be promptly performed when the assignment designation of the algorithm is received.

Moreover, as the present invention [13], an assignment history table is further provided, and the control circuit may update the assignment history table at a time of assignment completion of algorithms, and preliminarily download an algorithm with a highest usage frequency within algorithms not downloaded, from the assignment history table, to DSP's in which empty channels have occurred.

Namely, while the priority is fixedly determined in the above-mentioned present invention [12], in the present invention [13], an assignment history table is provided, the table is updated at the time of assignment completion of the algorithms, and the algorithm with the highest usage frequency is preliminarily downloaded from the assignment history table when the empty channels have occurred. Thus, an efficient algorithm which is further practical can be preliminarily prepared.

Furthermore, as the present invention [14], the control circuit may have preliminarily downloaded an algorithm with a highest priority within algorithms not downloaded to DSP's in which all of the processing positions have become empty.

Furthermore, as the present invention [15], an assignment history table is provided, and the control circuit may update the assignment history table at a time of assignment completion of algorithms, and have preliminarily downloaded an algorithm with a highest usage frequency within algorithms not downloaded, from the assignment history table, to DSP's in which all of the processing positions have become empty.

Namely, in case the above-mentioned assignment history table is used, an algorithm predetermined as the highest priority or the algorithm with the highest usage frequency prescribed in the assignment history table can be preliminarily downloaded to the DSP in which all of the processing positions have become empty, in the same way as the above-mentioned present inventions [12] and [13].

It is to be noted that as the present invention [16], the channel may comprise a voice channel, the DSP may include a voice encoding/decoding device, and the algorithm may comprise a processing program.

Also, as the present invention [17], a channel assignment controller may be further included for executing a channel assignment under control of the control circuit.

### Brief Description of Drawings

Fig.1 is a block diagram showing an embodiment (1) of a signal processing apparatus according to the present invention;
Fig.2 is a timing chart showing an operation (without multiplexing) of the embodiment (1);
Fig.3 is a flow chart showing an operation (without multiplexing) of the embodiment (1);
Fig.4 is a chart for illustrating an operation in case a time slot is considered in addition to an assignment of a channel and a DSP in the present invention;
Fig.5 is a flow chart showing an operation (with multiplexing) of the embodiment (1);
Fig.6 is a block diagram showing an embodiment (2) of a signal processing apparatus according to the present invention;
Fig.7 is a timing chart showing an operation (without multiplexing) of embodiments (2) and (3);
Fig.8 is a flow chart showing an operation (without multiplexing) of the embodiment (2);
Fig.9 is a timing chart showing an operation (with multiplexing) of the embodiments (2) and (3);
Fig.10 is a flow chart showing an operation (with multiplexing) of the embodiment (2);
Fig.11 is a block diagram showing the embodiment (3) of a signal processing apparatus according to the present invention;
Fig.12 is a flow chart showing an operation (without multiplexing) of the embodiment (3);
Fig.13 is a flow chart showing an operation (with multiplexing) of the embodiment (3);
Fig.14 is a block diagram showing an arrangement of a hardware used in a signal processing apparatus according to the present invention;
Fig.15 is a block diagram showing an arrangement of a prior art signal processing apparatus; and
Fig.16 is a chart showing a relationship of time slots at the time of processing in a prior art example.

### Description of Reference Numerals

10 DSP (CODEC) #1-#4
11 control circuit (master DSP)
12 read circuit
13, 131, 132 algorithm library (ROM)
14 channel assignment table
15 channel assignment controller
16 assignment history table
20 data bus

Throughout the figures, like reference numerals indicate like or corresponding components.

### Best Mode for Carrying Out the Invention

Hereinafter, a signal processing apparatus according to the present invention will be described in more detail by referring to attached drawings.

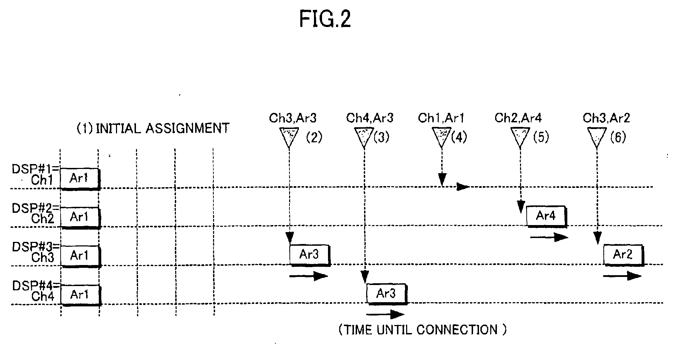

First of all, Ch1 indicates a channel 1 in Figs.2, 7, and 9. Ar1-Ar4 indicate names of algorithms. The algorithm names enclosed with a symbol □ indicate algorithms performing a download operation at the time of the symbol □.

While in the following description, cases where each of DSP's downloads only a single algorithm at a time will be described for the sake of simplification, cases where a plurality of algorithms are downloaded at a time to each of the DSP's can be easily applied.

Also, while multiplexing by time slots will be described by dividing the processing of the DSP's into equal time slots, which is for the sake of simplification, the processing position and length of the algorithms of the DSP's can be respectively an arbitrary position and an arbitrary length. Namely, a "time slot" described later is only one example of the processing time, and can be also applied to cases where upstream processing of the DSP's are sequentially executed upon the actual preparation.

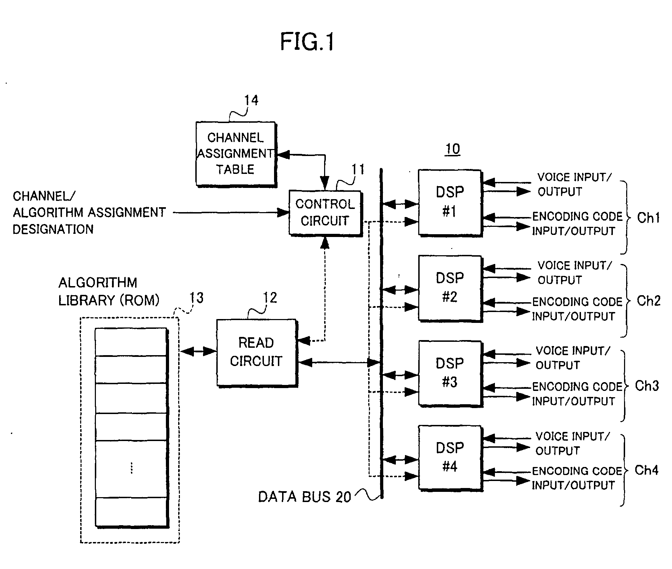

Fig.1 shows an embodiment (1) of a signal processing apparatus according to the present invention. Also in this embodiment, a voice channel is treated as a channel, and a voice CODEC is realized by the DSP. In this example, four DSP's #1-#4 respectively input/output voices and encoding codes corresponding to channels Ch1-Ch4, which are generally represented by DSP 10. As for the DSP, such a download type DSP as has a parallel interface and a serial interface can be used.

The DSP 10 is under control of a control circuit 11, which receives an assignment designation of a channel and an algorithm, and which is connected to an algorithm library 13 composed of an ROM, a PC card, or the like through a read (and data change) circuit 12. The algorithm library 13 is a memory for storing a firmware of voice encoding algorithms to be downloaded to the DSP 10. The read circuit 12 is a logical circuit for outputting the firmware read from the algorithm library 13 in order to distribute the firmware to the DSP 10 with the timing of a bus 20 connected to the DSP 10.

In addition, the control circuit 11 is connected to a channel assignment table 14, and the algorithm (program) read from the library 13 by the read circuit 12 is to be downloaded to the DSP 10 through the common bus 20.

Namely, when a channel designation signal comes from an upper control firmware, the control circuit 11 generates a timing for transferring firmware data to the DSP 10, and controls to make the DSP 10 read the data.

Hereinafter, the entire operation of the embodiment (1) will be described referring to a timing chart in Fig.2.

An initial assignment designation (1) of an algorithm and a channel is firstly received from an upper control software of the signal processing apparatus, so that a single algorithm Ar1 is downloaded to each of the DSP's #1-#4 as shown in Fig.2.

Then, an algorithm required for a channel required from the upper control software is downloaded. If the required algorithm has been already downloaded to the DSP, an additional download is not performed.

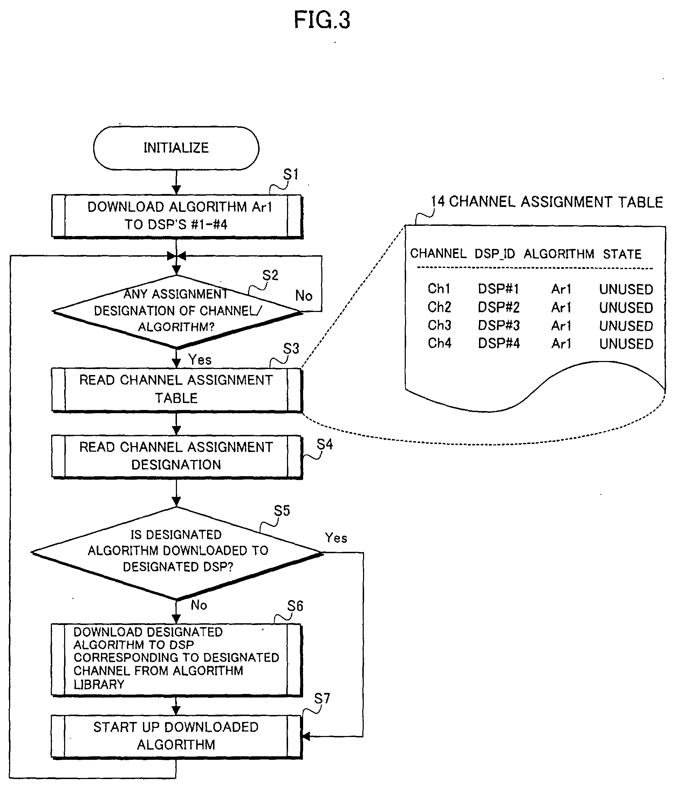

Namely, the assignment designation of the channel Ch3 and the algorithm Ar3 is received at an assignment designation (2). Since the channel assignment table 14 (see Fig.3) indicates that the channel Ch3 corresponds to the DSP #3, the control circuit 11 downloads the algorithm Ar3 to the DSP #3 from the library 13.

Also, at an assignment designation (3), the control circuit now downloads the algorithm Ar3 to the DSP #4 corresponding to the channel Ch4 from the library 13. At an assignment designation (4), the algorithm Ar1 has been already downloaded to the DSP #1 corresponding to the channel Ch1 at the initial assignment designation (1). Therefore, the algorithm Ar1 is immediately available.

Also, at an assignment designation (5), the algorithm Ar4 is downloaded from the library 13 to the DSP #2 corresponding to the channel Ch2. At an assignment designation (6), the algorithm Ar2 is downloaded from the library 13 to the DSP #3 corresponding to the channel Ch3 in spite of the assignment designation (2).

Fig.3 is a flow chart showing a processing operation in the control circuit 11 shown in Fig.1.

Namely, the control circuit 11 firstly performs the initial assignment (1) in which the algorithm Ar1 is downloaded to the DSP's #1-#4 (at step S1).

Then, whether or not there is an assignment designation of a channel and an algorithm is determined at step S2. Only in the presence of the assignment designation, the channel assignment table 14 is read, and the channel assignment designation obtained at step S2 is read (at steps S3 and S4).

Whether or not the algorithm designated by the above-mentioned assignment designation has been already downloaded to the DSP 10 is determined (at step S5). When it has been already downloaded, the control proceeds to step S7 like the assignment designation (4) in Fig.2 to start up the downloaded algorithm.

When it is found that the designated algorithm has not been downloaded at step S5, the designated algorithm is downloaded to the DSP corresponding to the designated channel from the library 13 as shown at the assignment designations (2), (3), (5), and (6) (at step S6), and the downloaded algorithm is started up (at step S7).

It is to be noted that since the relationship between the channels and the DSP's #1-#4 is fixed in this case, a special control to the channel assignment is not required.

In the above-mentioned embodiment, as already described in Fig.16, a processing delay of almost 1 frame at the maximum arises since only the time slots at regular intervals are taken into account.

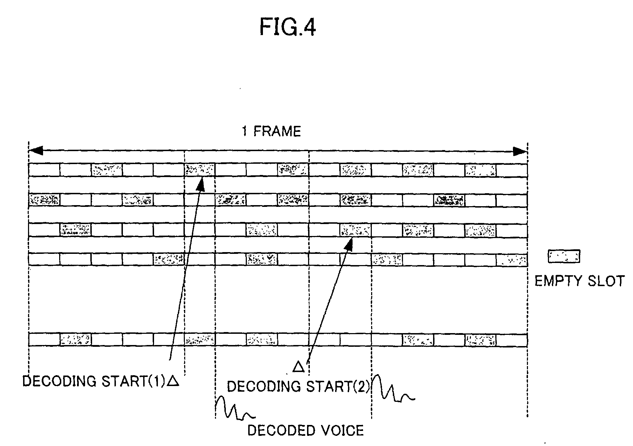

Therefore, in the present invention, if encoded data are inputted at a decoding start point (1), as shown in Fig.4, the channel of the decoding start point (1) is assigned to the closest slot to which voice encoding can be assigned. Thus, when the decoding is completed, the data are immediately outputted as voice. Therefore, the processing delay assumes "a time of 1 frame/n", supposing that the number into which 1 frame is divided is assumed to be "n". Accordingly, variable assignment to the slot is effective to delay reduction.

Since there was no empty slot in the closest slots in case of a decoding start (2), it is indicated that the decoding is deferred until the next slot to be started.

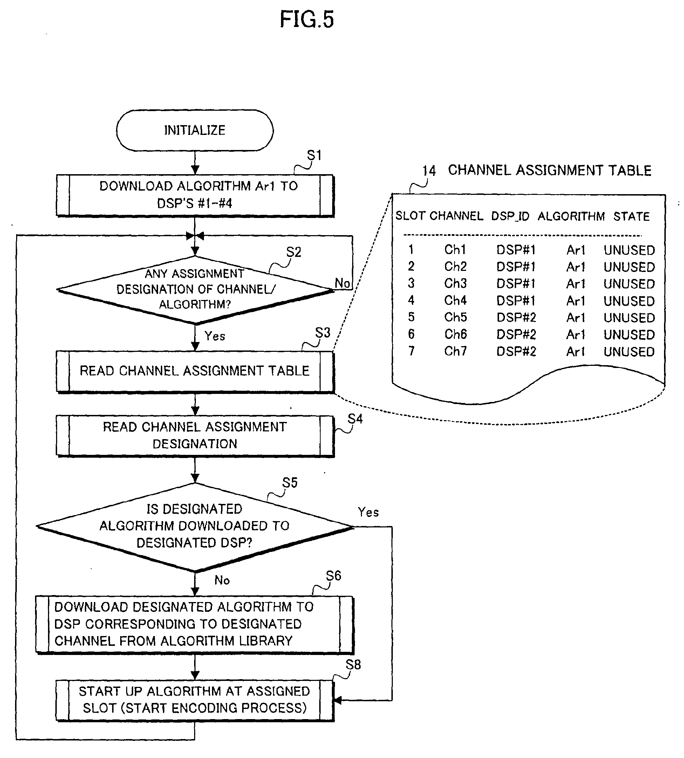

Fig.5 shows an operation flow in case where multiplexing in consideration of the time slot as shown in Fig.4 is included in the above-mentioned embodiment (1).

Namely, the channel assignment table 14 read at step S3 in this flow chart is different from that of Fig.3 in that a time slot is newly added to the table.

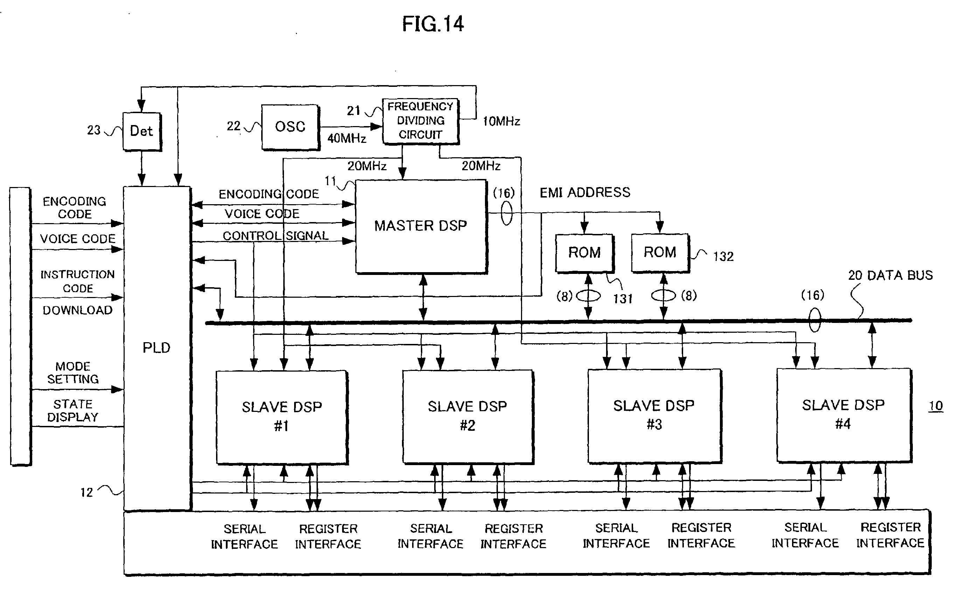

Steps S1-S6 are processed in the same way as those in the flow chart in Fig.3. However, at step S8 following step S6, an algorithm is started up (encoding start) at a slot corresponding to the channel shown in Fig.14.

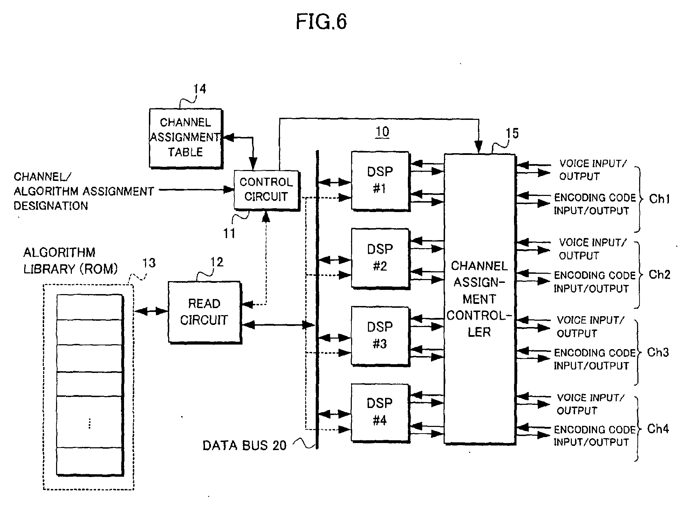

Fig.6 shows an embodiment (2) of the signal processing apparatus according to the present invention. In this embodiment, it is different from the embodiment (1) of Fig.1 in that a channel assignment controller 15 is provided to the voice input/output and the encoding code input/output of the DSP 10.

Namely, as already described, while a plurality of algorithms can be switched over in the embodiment (1), it takes time to perform the downloading from the library 13, resulting in a deterioration of service quality. In order to solve this problem, this embodiment (2) adopts an arrangement for realizing accelerated downloading.

Also, the ROM for storing a plurality of algorithms requires a large capacity, and the access time is not short. Furthermore, in case a flash disk or the like is used for the library 13, the access time becomes much longer. While the RAM can be used therefor, the scale of RAM integration is generally smaller than that of ROM integration, so that the downsizing is difficult.

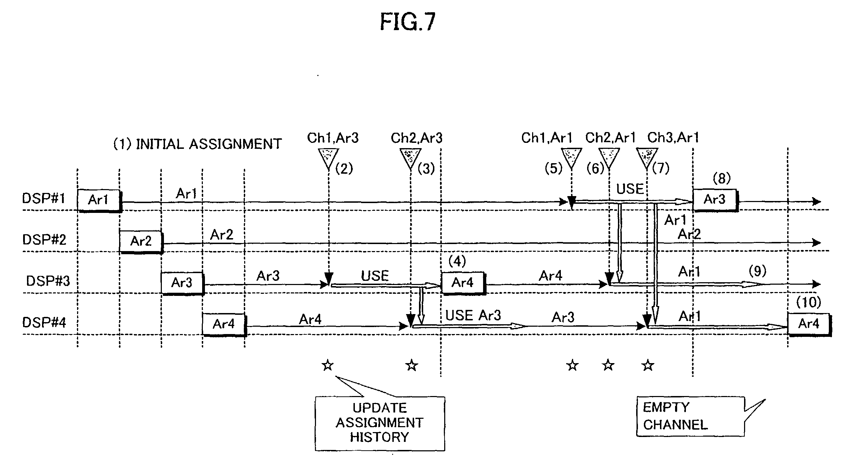

Therefore, in order to shorten the connection time in the embodiment (1), the operation shown in the timing chart of Fig.7 is executed in the embodiment (2) of the present invention, which will be hereinafter described.

Firstly, at the initial assignment (1), the algorithms are downloaded from the library 13 to the DSP #1-#4 in a predetermined priority (Ar1>Ar2>Ar3>Ar4).

At the assignment designation (2), the DSP #3 to which the algorithm Ar3 has been downloaded is now assigned to the channel Ch1. At this time, the channel assignment table 14 is updated.

Although having been already downloaded to the DSP #3 at the assignment designation (3), the algorithm Ar3 is used for the channel Ch1. Therefore, a required channel Ch2 is assigned to the DSP #4 to which the algorithm Ar4 with the lowest priority has been downloaded, so that the control circuit 11 controls the channel assignment controller 15 (hereinafter, channel assignment control will be similarly performed). Also, the data from the DSP #3 to which the algorithm Ar3 has been downloaded are transferred to the DSP #4 to be downloaded. At this time, the channel assignment table 14 is also updated.

The processing (4) indicates that a call via the channel Ch1 is completed and the DSP #3 is released. Since an unused algorithm Ar4 is not downloaded at this time, it is downloaded from the algorithm library 13 to be prepared for the next assignment designation.

At the assignment designation (5), the channel Ch1 is assigned to the DSP #1 to which the algorithm Ar1 has been downloaded and which is empty. At this time, the channel assignment table 14 is also updated.

At the assignment designation (6), the channel Ch2 is assigned to the DSP #3 which has downloaded thereto the algorithm Ar4 with the lowest priority within the empty DSP's #2-#4. Then, the channel assignment table 14 is updated.

At the assignment designation (7), the channel Ch3 is assigned to the DSP #4 which has downloaded thereto the algorithm Ar3 with the lowest priority within the empty DSP's #2 and #4. Then, the channel assignment table 14 is updated.

At the processing (8), since the call via the channel Ch1 and the algorithm Ar1 is completed and the DSP #1 becomes empty, the algorithm Ar3 with the highest priority in the algorithms which have not been downloaded is downloaded to the DSP #1 from the library 13.

At the processing (9), although the call via the channel Ch2 and the algorithm Ar1 is completed and the DSP #3 becomes empty, the change of the algorithm is not performed since the algorithm Ar1 with a higher priority has been downloaded.

At the processing (10), since the call via the channel Ch3 and the algorithm Ar1 is completed and the DSP #4 becomes empty, the algorithm Ar4 with the highest priority which has not been downloaded is downloaded to the DSP #4 from the library 13.

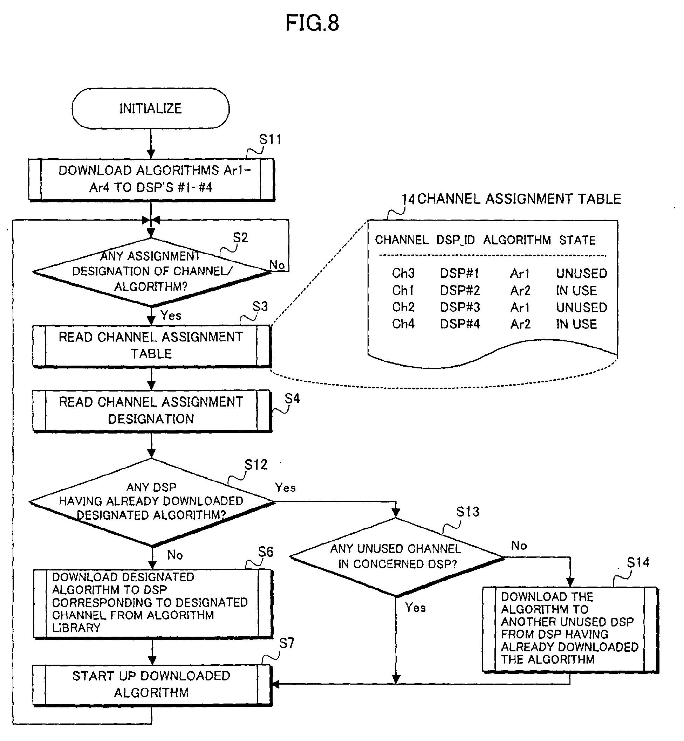

Fig.8 is a flow chart showing an operation of the control circuit 11 in the embodiment (2) shown in Fig.6. In this example, the processing in which the time slot is not taken into account (without multiplexing) is treated.

Comparing the operation flow of Fig.8 with that of the embodiment (1) shown in Fig.3, it is found that steps S11-S14 are added in Fig.8.

Namely, at the time of the initial assignment (1), the algorithms Ar1-Ar4 are preliminarily downloaded respectively to the DSP's #1-#4 from the library 13 (at step S11). This assignment is set based on an expected rate as to how the algorithms are used. In case "the algorithm Ar1 is 30%" is set, the algorithm Ar1 is set to three DSP's in an apparatus having ten DSP's.

In the embodiment of Fig.6, it is supposed that there are four DSP's and four algorithms with the ratio of the algorithms Ar1-Ar4 being almost equal. However, the priority is Ar1>Ar2>Ar3>Ar4 in the same way as the above.

After the processes at steps S2-S4, whether or not there is any DSP which has already downloaded thereto the designated algorithm is determined (at step S12). Since it is indicated in the channel assignment table 14 that the algorithm Ar2 has been downloaded to the DSP's #2 and #4 in this embodiment, the control proceeds to step S13. Then, whether or not there is any unused channel in the DSP's #2 and #4 is determined. Since both of them are in use, the concerned algorithm is downloaded from the DSP which has already downloaded same to another unused DSP (at step S14).

It is to be noted that an unused channel in the concerned DSP (channels Ch3 and Ch2 for algorithm Ar1) can be used at step S13. The algorithm Ar1 in the table 14 corresponds to the assignment designations (6) and (7) shown in Fig.7.

Also, in the absence of a DSP which has already downloaded thereto the algorithm designated at step S12, steps S6 and S7 are executed in the same way as the embodiment (1).

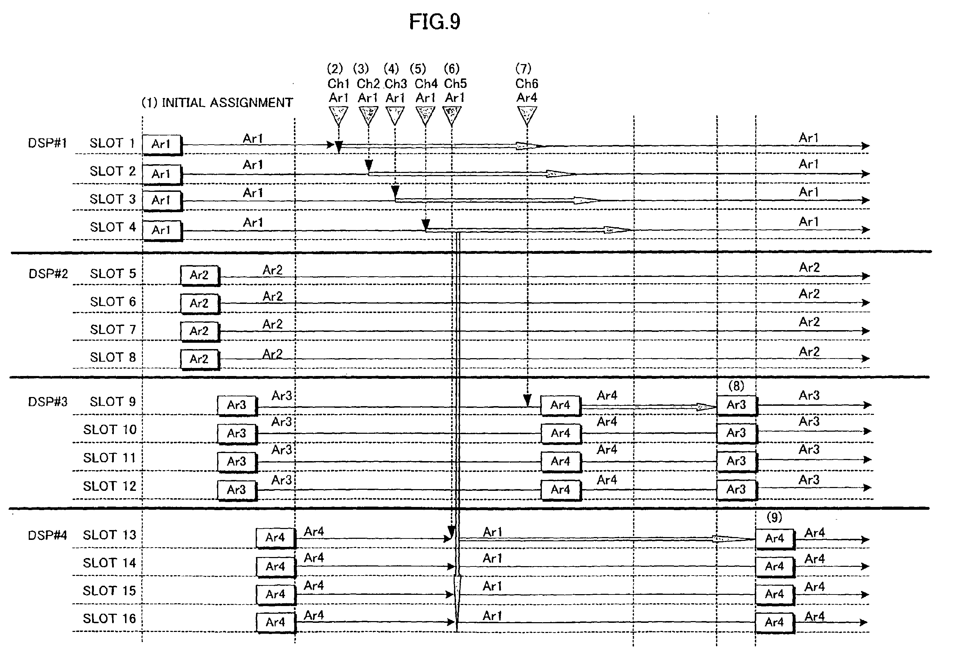

The multiplexing in which the time slot is taken into account is not performed in the operation timing chart of Fig.7. However, cases where the time slot is taken into account in the operation timing chart are shown in Fig.9.

Namely, as shown in Fig.9, slots 1-4, 5-8, 9-12, and 13-16 are respectively assigned to four DSP's #1-#4. At the initial assignment (1), the algorithm Ar1 is preliminarily commonly downloaded to the slots 1-4 of the DSP #1. Similarly, the algorithms Ar2-Ar4 are sequentially downloaded to each slot of the DSP's #2-#4.

In such a state, when the assignment designation of the common algorithm Ar1 is performed to the channels Ch1-Ch4 at the assignment designations (2)-(5), the channels are sequentially assigned to the DSP #1 which has downloaded thereto the designated algorithm Ar1 according to the assignment designation as shown in Fig.9 since the DSP #1 has empty slots.

At the assignment designation (6), the assignment designation of the algorithm Ar1 for the channel Ch5 is performed. Although the DSP #1 has already downloaded thereto the algorithm Ar1, it has no empty slot. Therefore, the algorithm Ar1 is assigned to the slots 13-16 of the DSP #4 which has downloaded thereto the algorithm Ar4 with the predetermined lowest priority.

Furthermore, at the assignment designation (7), the algorithm Ar4 is required for the channel Ch6. Since there is no DSP which has already downloaded thereto the algorithm Ar4 at this point, the algorithm Ar4 is downloaded, from the library 13, to the DSP #3 which has downloaded thereto the algorithm Ar3 with the lowest priority in the algorithms having now been downloaded.

Since all of the slots become empty at the processing (8), the algorithm Ar3 with the highest priority in the algorithms which have not been downloaded to any DSP is downloaded from the library 13.

Since all of the slots also become empty at the processing (9), the algorithm Ar4 (only this algorithm exists) with the highest priority in the algorithms which have not been downloaded to any DSP is downloaded.

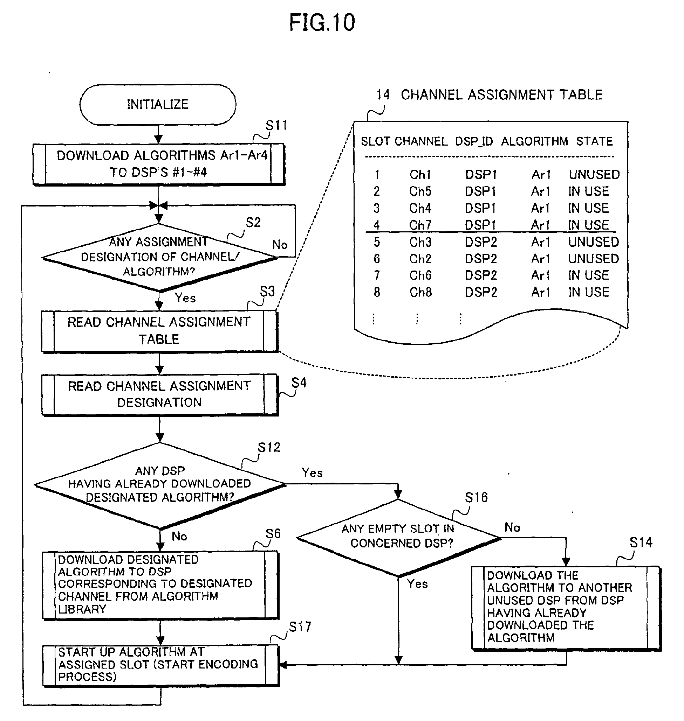

Fig.10 shows an operation flow of the control circuit 11 at the time of executing the operation timing of the embodiment (2) in consideration of such time slots. In comparison with Fig.8, it is found that the slots are set corresponding to the channel and the DSP in the table 14, and whether or not the DSP which has already downloaded thereto the designated algorithm has an empty slot is determined at step S16 in Fig.10.

In the presence of an empty slot, the algorithm is started up at the assigned slot (at step S17), while in the absence of an empty slot, the algorithm is started up at the slot assigned by downloading the concerned algorithm from the DSP to which the algorithm has been already downloaded to another unused DSP.

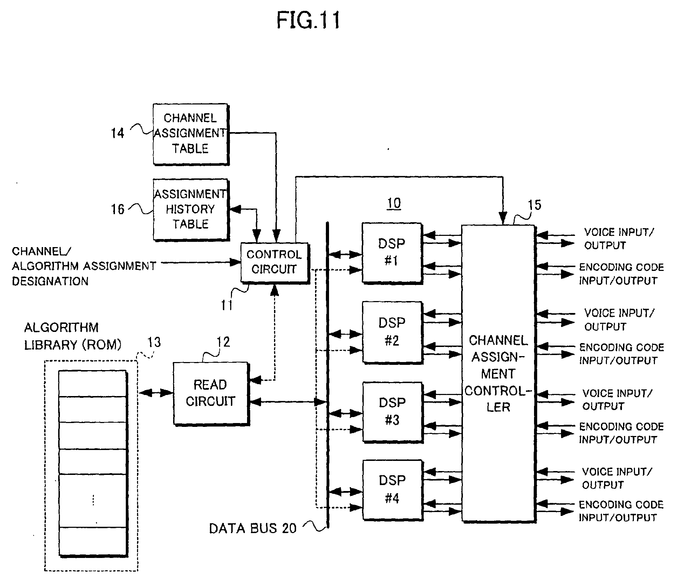

Fig.11 shows an embodiment (3) of a signal processing apparatus according to the present invention. In comparison with the embodiment (2) shown in Fig.6, it is seen that an assignment history table 16 is newly provided in Fig.11 and is connected to the control circuit 11.

The operation timing of this embodiment is superficially the same as that of the embodiment (2) shown in Fig.7.

However, selection standards for algorithms to be downloaded respectively from the library 13 are different in the processings (4), (8), and (10).

Namely, the time for call connection becomes long because of the downloading from the library 13. However, if the number of channels of the DSP 10 to be aggregated have a margin with respect to the number of same generally used, such a case occurs with less frequency. This setting is determined by a trade-off with cost.

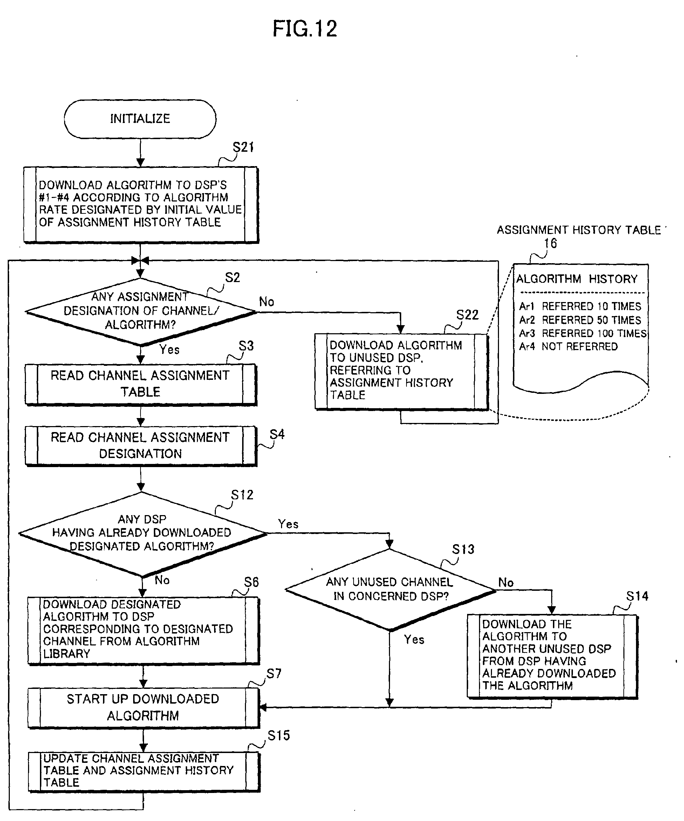

This method is disadvantageous in case an initially set availability rate is different from an actual available rate and a change in time occurs. Therefore, while the algorithm is selected according to the predetermined priority in the embodiment (2), the algorithm is selected based on the assignment history table 16 in the embodiment (3). Namely, the assignment history table stores an accumulation of a usage frequency of algorithms, as shown in the operation flow in Fig.12 for the corresponding control.

The operation flow in Fig.12 is different from that of the embodiment (2) in Fig.8 in that steps S21 and S22 are used.

Namely, the algorithm is downloaded to the DSP's #1-#4 according to the algorithm rate set in the initial value of the assignment history table (at step S21). In the absence of the assignment designation of the channel and the algorithm (at step S2), the algorithm is downloaded to the unused DSP by referring to the assignment history table 16 (at step S22).

Namely, while in the operation timing of Fig.7, an example where the algorithm Ar4 is selected at e.g. the processing (4) is shown, in case the history frequency of e.g. the algorithm Ar1 is the fewest at this time, the algorithm Ar1 is downloaded from the library 13 instead of the algorithm Ar4. The same is applied to the processings (8)-(10).

Thus, the history indicating which algorithm the assigned DSP is prepared for is made and based on the history (which measures an appearance frequency per algorithm for a fixed time) the rates of the algorithms assigned to CODEC's are determined. In case the algorithms are deviated in a certain area (in case there are many terminals of a specific algorithm in a specific area) for example, that approach enables an improvement of a service quality in comparison with the case where the rate is determined as a whole.

It is to be noted that the other steps in Fig.12 are executed in the same way as those in the operation flow of the embodiment (2) shown in Fig.8.

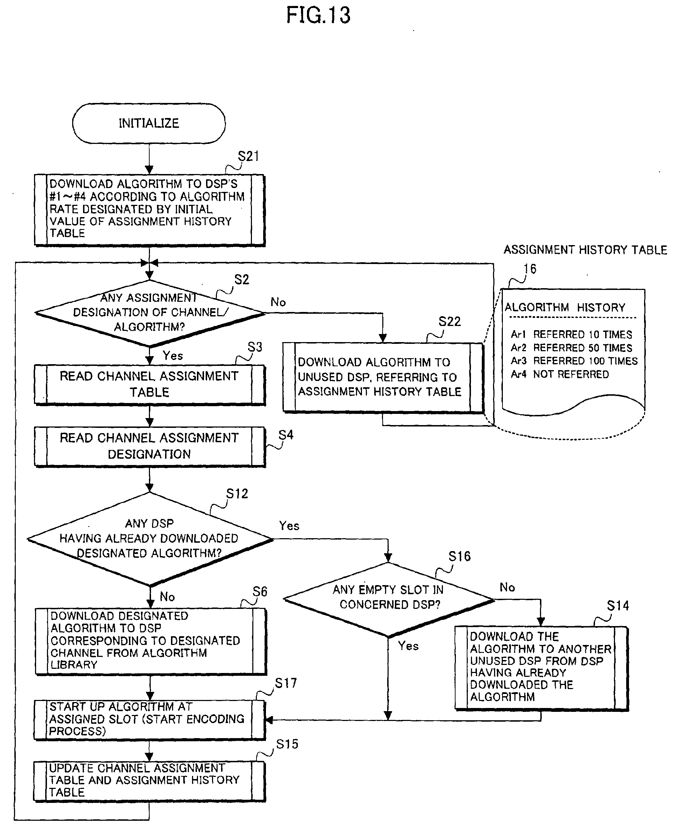

Fig.13 is an operation flow of the embodiment (3), where the processing in which the time slot (with multiplexing) is taken into account is shown. In Fig.13, step S16 is substituted for step S13 in the operation flow of Fig.12, and step S17 is substituted for step S7. The relationships are the same as those between Figs.8 and 10.

Fig.14 shows an arrangement of a hardware used for the signal processing apparatus according to the present invention. The DSP 10 is composed of four slave DSP's #1-#4, which are connected to a master DSP 11 through the data bus 20. The master DSP 11 composes the control circuit and the tables.

Also, ROM's 131 and 132 composing the algorithm library are connected to the data bus 20, and the read circuit 12 composed of a Programmable Logic Device (PLD) is also connected to the data bus 20.

It is to be noted that a frequency dividing circuit 21 divides an oscillating frequency (40 MHz) from an oscillator 22 into 20 MHz and 10 MHz to be provided to the DSP 10 and a clock disconnection detecting circuit 23.

In comparison with the hardware arrangement of the embodiment (1) in Fig.1, the read circuit 12 is included in the PLD 12 in Fig.14, and the control circuit 11 is realized by the master DSP 11 as the firmware.

Also, the channel assignment designation is received from an external signal line for mode setting, and is provided to the master DSP 11 through the PLD 12. Also, the algorithm library is stored in the ROM's 131 and 132 as the firmware of the DSP's.

Furthermore, in the relationship with the embodiment (2) shown in Fig.6, the channel assignment table is composed as a firmware in the master DSP 11. The channel assignment controller 15 is similarly composed as a firmware in the master DSP 11.

Furthermore, in case of the embodiment (3) shown in Fig.11, the assignment history table 16 is also composed in the master DSP 11 a firmware.

As described above, a processing (called download) of setting a program in the internal RAM of the DSP every time a certain algorithm is required (call is generated) and of executing the program enables a plurality of algorithms to be downloaded to the DSP's (CODEC's) having a plurality of channels with a small hardware in a short time.

Also, while cases where a single algorithm can be downloaded to the DSP's at a time is described in the above, cases where a plurality of algorithms can be downloaded to the DSP's at a time can be easily analogized by a general designer of a signal processing apparatus for DSP's. In fact, it is realized only by extending the column of the algorithm in the channel assignment table 14 of Fig.3 so as to store a plurality of algorithms.

Also, while the concept of slots is used for convenience' sake in order to simplify the description in the above description, a person with ordinary skill in the art can easily analogize the position at which the DSP starts the processing of algorithm and the time of the processing, even if the position is not at a specified position. In fact, the empty slot in Fig.4 can be supposed to be the position where the DSP can perform the processing, and can be supposed to be at an arbitrary position and length. Also, a delay reduction is effective, even if the position at which the DSP starts the processing of algorithm and the time when the DSP performs the processing are not at the specified position, enabling the reduction of the processing delay.

## Claims

1. A signal processing apparatus comprising a control circuit for controlling a plurality of DSP's, and a library for storing a plurality of signal processing algorithms, for assigning channels, to be used, to the DSP's, **characterized in that**:
a channel assignment table is provided, and the control circuit, when an assignment designation of a channel and an algorithm for each of the DSP's is received, compares the designated algorithm with the algorithms having been already downloaded to the DSP's based on the table, thereby downloading only an algorithm required to be newly downloaded from the library to the DSP's or between the DSP's and assigning the downloaded algorithm to the received channel.

2. The signal processing apparatus as claimed in claim 1 wherein the channel assignment table fixedly stores a relationship between channels in use and the DSP's, and the control circuit detects a DSP corresponding to the designated channel by referring to the table and newly downloads the designated algorithm from the library for the DSP.

3. The signal processing apparatus as claimed in claim 2 wherein the channel assignment table fixedly stores the relationship between the channels and processing positions, and the control circuit starts up the algorithm at an empty processing position in assigned processing positions by referring to the table for the DSP to which the algorithm is newly downloaded.

4. The signal processing apparatus as claimed in claim 1 wherein the channel assignment table variably stores a relationship between the channels in use and the DSP's, and in case a DSP exists which has already downloaded the designated algorithm and which has an unused channel, the control circuit uses the algorithm of the DSP and updates the table.

5. The signal processing apparatus as claimed in claim 1 or 4 wherein the channel assignment table variably stores the relationship between the channels in use and the DSP's, and in case a DSP exists which has already downloaded a designated algorithm and which has no unused channel, the control circuit newly downloads the algorithm from the DSP to a different DSP, and updates the table.

6. The signal processing apparatus as claimed in claim 1 wherein the channel assignment table variably stores a relationship between the channels in use, the DSP's, and processing positions, and in case a DSP exists which has already downloaded the designated algorithm and which has an empty processing position, the control circuit newly downloads the algorithm from the DSP, and updates the table.

7. The signal processing apparatus as claimed in claim 1 or 6 wherein the channel assignment table variably stores the relationship between the channels in use, the DSP's, and the processing positions, and in case a DSP exists which has already downloaded the designated algorithm and which has no empty processing position, the control circuit newly downloads the algorithm of the DSP to a different DSP, and updates the table.

8. The signal processing apparatus as claimed in claim 5 or 7 wherein the control circuit selects a DSP which has downloaded an algorithm with a lower priority as the different DSP.

9. The signal processing apparatus as claimed in claim 6 or 7 wherein the control circuit starts up the downloaded algorithm at an assigned processing position.

10. The signal processing apparatus as claimed in any one of claims 1 to 9 wherein the control circuit has initially downloaded an identical algorithm to the DSP's.

11. The signal processing apparatus as claimed in any one of claims 1 to 9 wherein the control circuit has initially downloaded different algorithms to the DSP's.

12. The signal processing apparatus as claimed in claim 4 or 5 wherein the control circuit has preliminarily downloaded an algorithm with a highest priority within algorithms not downloaded to DSP's in which empty channels have occurred.

13. The signal processing apparatus as claimed in claim 4 or 5, further comprising an assignment history table,
the control circuit updating the assignment history table at a time of assignment completion of algorithms, and preliminarily downloading an algorithm with a highest usage frequency within algorithms not downloaded, from the assignment history table, to DSP's in which empty channels have occurred.

14. The signal processing apparatus as claimed in claim 6 or 7 wherein the control circuit has preliminarily downloaded an algorithm with a highest priority within algorithms not downloaded to DSP's in which all of the processing positions have become empty.

15. The signal processing apparatus as claimed in claim 6 or 7, further comprising an assignment history table,
the control circuit updating the assignment history table at a time of assignment completion of algorithms, and having preliminarily downloaded an algorithm with a highest usage frequency within algorithms not downloaded, from the assignment history table, to DSP's in which all of the processing positions have become empty.

16. The signal processing apparatus as claimed in any one of claims 1 to 15 wherein the channel comprises a voice channel, the DSP includes a voice encoding/decoding device, and the algorithm comprises a processing program.

17. The signal processing apparatus as claimed in any one of claims 4 to 16, further comprising a channel assignment controller for executing
a channel assignment under control of the control circuit.
